# EUROPÄISCHE PATENTANMELDUNG

(11) **EP 4 155 253 A1**
(43) Veröffentlichungstag der Anmeldung: **29.03.2023**
(21) Anmeldenummer: 22194761.7
(22) Anmeldetag: 09.09.2022
(51) Int. Cl.: B67C 3/00, B67C 3/28

(54) **VERFAHREN ZUM BETREIBEN EINER ABFÜLLANLAGE UND ABFÜLLANLAGE**

(30) Priorität: 24.09.2021 DE 102021124777
(71) Anmelder: Krohne Messtechnik GmbH, 47058 Duisburg (DE)
(72) Erfinder: Kuschnerus, Dirk, 47802 Krefeld (DE); Walbrecker, Sven, 46485 Wesel (DE); Krawczyk-Becker, Martin, 44653 Herne (DE); Mucke, Hansjörg, 41066 Möchengladbach (DE)
(74) Vertreter: Gesthuysen Patentanwälte

(57) **Zusammenfassung**

Die Erfindung betrifft ein Verfahren (100) zum Betreiben einer Abfüllanlage (1), mit wenigstens einer ersten Füllstelle (2), wenigstens einer zweite Füllstelle (3) und wenigstens eine Steuer- und Auswerteeinheit (4) zur Regelung und Überwachung der Abfüllprozesse, wobei die erste Füllstelle (2) ein erstes Füllventil (5) und einen ersten Durchfluss- oder Füllstandssensor (6) aufweist, und wobei die zweite Füllstelle (3) ein zweites Füllventil (7) und einen zweiten Durchfluss- oder Füllstandssensor (8) aufweist, und wobei in der Steuer- und Auswerteeinheit (4) Referenzventilkennlinien des ersten Füllventils (5) und des zweiten Füllventils (7) abgelegt sind.

Die Aufgabe, ein Verfahren (100) anzugeben, mit dem auf vereinfachte Art eine Fehlerüberwachung einer Abfüllanlage (1) realisiert werden kann, ist dadurch gelöst, dass in einem Ermittlungsschritt (101) aktuelle Ventilkennlinien der Füllventile (5, 7) ermittelt werden, dass in einem Vergleichsschritt (102) die aktuelle Ventilkennlinien der Füllventile (5, 7) mit den entsprechenden Referenzventilkennlinien verglichen werden, dass in einem Abgleichschritt (103) abgeglichen wird, an wie vielen der Füllstellen (2, 3) ein Abweichen der aktuellen Ventilkennlinie von der zugehörigen Referenzventilkennlinie auftritt und dass in einem Signalisierungsschritt (104) im Fall eines Abweichens der Ventilkennlinie von der Referenzventilkennlinie an einer Füllstelle (2, 3) ein Füllstellenfehler der entsprechenden Füllstelle (2, 3) erkannt und signalisiert (104') wird und im Fall des Abweichens der Ventilkennlinie von der Referenzventilkennlinie an beiden Füllstellen (2, 3) ein Prozessfehler erkennt und signalisiert (104") wird.

## Beschreibung

Die Erfindung betrifft ein Verfahren zum Betreiben einer Abfüllanlage, wobei die Abfüllanlage wenigstens eine erste Füllstelle, wenigstens eine zweite Füllstelle und wenigstens eine Steuer- und Auswerteeinheit zur Regelung und Überwachung der Abfüllprozesse aufweist, wobei die erste Füllstelle wenigstens ein erstes Füllventil und wenigstens einen ersten Durchflussoder Füllstandssensor aufweist, und wobei die zweite Füllstelle wenigstens ein zweites Füllventil und wenigstens einen zweiten Durchfluss- oder Füllstandssensor aufweist, und wobei in der Steuer- und Auswerteeinheit eine Referenzventilkennlinie des ersten Füllventils und eine Referenzventilkennlinie des zweiten Füllventils abgelegt ist. Zudem betrifft die Erfindung eine Abfüllanlage.

Abfüllanlagen kommen in der Prozesstechnik häufig zum Einsatz und dienen der Abfüllung von einem Medium oder mehreren Medien in dafür vorgesehene Behältnisse. Eine Abfüllanlage weist in der Regel mehrere Füllstellen auf, an denen jeweils ein Abfüllprozess realisiert wird. Eine Füllstelle weist dazu ein Füllventil zur Regelung des Durchflusses und einen Durchflusssensor oder einen Füllstandssensor zur Ermittlung der Menge des abzufüllenden oder abgefüllten Mediums auf.

Aus dem Stand der Technik ist es bekannt, die Abfüllprozesse und damit die Funktionsweise der Abfüllanlage und/oder einzelner Füllstellen mit Hilfe von externen Prüfmitteln zu überwachen. Hierzu wird beispielsweise der Füllstand des Behältnisses nach erfolgter Befüllung mittels einer Kamera überwacht und/oder das Gewicht des Behältnisses nach der Befüllung ermittelt und somit auf den Füllgrad geschlossen. Bei einer Abweichung des Füllgrades von einem erwarteten Füllgrad über eine Toleranzgrenze hinaus wird auf einen Fehler im Abfüllprozess geschlossen.

Nachteilig an der aus dem Stand der Technik bekannten Vorgehensweise ist, dass zum einen externe Prüfmittel verwendet werden müssen, die zusätzliche Kosten und zusätzlichen Wartungsaufwand mit sich bringen. Zum anderen ist nachteilig, dass zwar erkannt werden kann, dass ein Fehler im Abfüllprozess vorliegt, dass jedoch die Ursache des Fehlers nicht ohne Weiteres erkannt und die Fehlerquelle nicht lokalisiert werden kann.

Der Erfindung liegt die Aufgabe zugrunde, ein Verfahren anzugeben, mit dem auf gegenüber dem Stand der Technik vereinfachte Art und Weise eine Fehlerüberwachung einer Abfüllanlage realisiert werden kann. Zudem liegt der Erfindung die Aufgabe zugrunde, eine Abfüllanlage bereitzustellen, die auf einfache Art und Weise auf Fehler überwacht werden kann.

Wenn es heißt, dass in der Steuer- und Auswerteeinheit eine Referenzventilkennlinie des ersten Füllventils und eine Referenzventilkennlinie des zweiten Füllventils abgelegt ist, dann können die Referenzventilkennlinien in der Vergangenheit ermittelt und abgelegt worden sein. Ebenfalls können die Referenzventilkennlinien unmittelbar oder in zeitlicher Nähe vor der Durchführung der im Folgenden beschriebenen Verfahrensschritte ermittelt und abgelegt worden sein. Insbesondere kann auch eine der Referenzventilkennlinien in der Vergangenheit ermittelt und abgelegt worden sein und die andere Referenzventilkennlinie unmittelbar oder in zeitlicher Nähe vor der Durchführung der Verfahrensschritte abgelegt worden sein. Relevant ist lediglich, dass die Referenzventilkennlinien in der Steuer- und Auswerteeinheit abgelegt sind, bevor die im Folgenden beschriebenen Verfahrensschritte ausgeführt werden.

Eine Ventilkennlinie beschreibt den Durchfluss in Abhängigkeit des Öffnungsgrades des Ventils, insbesondere des Ventilhubs. Bei einer linearen Ventilkennlinie beispielsweise ist der Durchfluss direkt proportional zum Ventilhub, bei einer gleichprozentigen Ventilkennlinie führt jede Änderung des Ventilhubs zu einer gleichprozentigen Änderung des Durchflusses.

Das erfindungsgemäße Verfahren zeichnet sich zunächst und im Wesentlichen dadurch aus, nämlich durch die Merkmale des kennzeichnenden Teils des Patentanspruchs 1, dass in einem Ermittlungsschritt im Betriebszustand der Abfüllanlage die Steuer- und Auswerteeinheit eine aktuelle Ventilkennlinie des ersten Füllventils und eine aktuelle Ventilkennlinie des zweiten Füllventils ermittelt. Hierbei müssen die aktuellen Ventilkennlinien nicht über den gesamten Bereich ermittelt werden, wie die Referenzventilkennlinien. Vielmehr müssen die aktuellen Ventilkennlinien über einen aussagekräftigen Bereich ermittelt werden, wobei unter einem aussagekräftigen Bereich ein derartiger Bereich zu verstehen ist, der groß genug ist, um eine mögliche Abweichung einer aktuellen Ventilkennlinie von einer Referenzventilkennlinie zu erkennen. Hierzu ist es insbesondere ausreichend, eine ausreichende Anzahl an Punkten der aktuellen Ventilkennlinie zu bestimmen, die das Erkennen einer Abweichung ermöglichen. Inwieweit eine Anzahl an Punkten ausreichend ist, liegt im Ermessen des Fachmanns und ist abhängig von der jeweiligen Prozesssituation. Bevorzugt werden jedoch wenigstens zwei, weiter bevorzugt wenigstens drei Punkte der aktuellen Ventilkennlinie bestimmt.

Erfindungsgemäß vergleicht die Steuer- und Auswerteeinheit in einem Vergleichsschritt die aktuelle Ventilkennlinie des ersten Füllventils mit der Referenzventilkennlinie des ersten Füllventils und die aktuelle Ventilkennlinie des zweiten Füllventils mit der Referenzventilkennlinie des zweiten Füllventils. In dem Vergleichsschritt erkennt die Steuer- und Auswerteeinheit, ob die aktuelle Ventilkennlinie über einen vorgegebenen Toleranzbereich hinaus von der Referenzventilkennlinie abweicht oder nicht. Der vorgegebene Toleranzbereich kann beispielsweise von einem Benutzer gewählt und in der Steuer- und Auswerteeinheit abgelegt werden.

In einem Abgleichschritt gleicht die Steuer- und Auswerteeinheit erfindungsgemäß ferner ab, an wie vielen der Füllstellen ein Abweichen einer aktuellen Ventilkennlinie von einer zugehörigen Referenzventilkennlinie auftritt.

Erfindungsgemäß ist weiter vorgesehen, dass die Steuer- und Auswerteeinheit in einem Signalisierungsschritt im Fall eines Abweichens der Ventilkennlinie von der Referenzventilkennlinie an beiden Füllstellen einen Prozessfehler erkennt und signalisiert und im Fall des Abweichens der Ventilkennlinie von der Referenzventilkennlinie an einer Füllstelle einen Füllstellenfehler der entsprechenden Füllstelle erkennt und signalisiert. Ein Signalisieren kann beispielsweise durch die Ausgabe eines akustischen oder optischen Signals realisiert sein, ein Signalisieren kann jedoch auch beispielsweise durch das Ausgeben oder Speichern einer entsprechenden Meldung beispielsweise ein einem internen Speicher der Steuer- und Auswerteeinheit realisiert sein.

Das erfindungsgemäße Verfahren ermöglicht auf einfache Art und Weise das Erkennen eines Fehlers und eine Unterscheidung der Fehlerquelle eines in einer Abfüllanlage auftretenden Fehlers. Erfindungsgemäß kann also ohne großen Aufwand erkannt werden, ob ein auftretender Fehler ein Prozessfehler oder ein Füllstellenfehler ist.

Der Grundgedanke des beanspruchten Verfahrens besteht darin, dass bei der Verwendung einer Vielzahl von Füllstellen in der Abfüllanlage für alle Füllstellen eine aktuelle Ventilkennlinie erfasst wird. Wird lediglich bei einer aktuellen Ventilkennlinie der Vielzahl von Füllstellen eine Abweichung außerhalb des Toleranzbereichs von der Referenzventilkennlinie festgestellt, kann mit hoher Wahrscheinlichkeit auf einen Fehler in ebendieser Füllstelle geschlossen werden. Zeigen aber alle aktuellen Ventilkennlinien der Vielzahl an Füllstellen eine ähnliche Abweichung von ihrer jeweiligen Referenzventilkennlinie, liegt ein Fehler vor, der nicht mit den einzelnen Füllstellen in Zusammenhang steht, jedenfalls ist es hochgradig unwahrscheinlich, dass alle Füllstellen der Vielzahl an Füllstellen zeitgleich einen gleichgearteten Fehler aufweisen.

In einer besonders bevorzugten Ausgestaltung weist die Steuer- und Auswerteeinheit wenigstens eine erste Teil-Einheit und eine zweite Teil-Einheit auf. Die erste Teil-Einheit realisiert die Regelung und Überwachung der ersten Füllstelle und die zweite Teil-Einheit realisiert die Regelung und Überwachung der zweiten Füllstelle. Die erste Teil-Einheit und die zweite Teil-Einheit sind zudem über einen Kommunikationskanal miteinander verbunden. Über den Kommunikationskanal können die Teil-Einheiten Daten und Informationen austauschen. Der Kommunikationskanal kann drahtgebunden oder drahtfrei realisiert sein. Das erfindungsgemäße Verfahren zeichnet sich in einer derartigen Ausgestaltung der Steuer- und Auswerteeinheit in einer besonders bevorzugten Variante dadurch aus, dass die erste Teil-Einheit und die zweite Teil-Einheit im Abgleichschritt Informationen über den Zustand der Füllventile austauschen und abgleichen. Besonders bevorzugt wird ein Abweichen der aktuellen Ventilkennlinien von den entsprechenden Referenzventilkennlinien abgeglichen. Insbesondere wird also abgeglichen, ob ein Abweichen vorliegt oder nicht.

In einer Variante fordert die erste Teil-Einheit die zweite Teil-Einheit zur Übermittlung der Informationen auf und übermittelt die zweite Teil-Einheit die angefragten Informationen an die erste Teil-Einheit. Die erste Teil-Einheit führt dann den Abgleich der Informationen aus. Bevorzugt führt die erste Teil-Einheit dann zudem den Signalisierungsschritt aus.

In einer weiteren Variante fordert die erste Teil-Einheit die zweite Teil-Einheit zur Übermittlung der Informationen auf und fordert zudem die zweite Teil-Einheit die erste Teil-Einheit zur Übermittlung der Informationen auf. Beide Teil-Einheiten führen unabhängig den Abgleich der Informationen aus. Weiter bevorzugt tauschen die beiden Teil-Einheiten ihr jeweiliges Ergebnis des Abgleichs mit der anderen Teil-Einheit aus. In einer Variante führt eine der beiden Teil-Einheiten den Signalisierungsschritt aus. In einer alternativen Variante führen beide Teil-Einheiten den Signalisierungsschritt aus.

In der Ausgestaltung, in der beide Teil-Einheiten den Abgleichschritt ausführen, wird eine Redundanz des Abgleichens verwirklicht.

Ganz besonders vorteilhaft ist eine Ausführungsform des erfindungsgemäßen Verfahrens, bei der in dem Abgleichschritt das Maß und/oder die Richtung der Abweichung der aktuellen Ventilkennlinien der Füllventile von den Referenzventilkennlinien der Füllventile abgeglichen werden. Weiter bevorzugt wird ein Prozessfehler im Signalisierungsschritt dann erkannt und ausgegeben, wenn das Maß und/oder die Richtung der Abweichung in einem vorgegebenen Toleranzbereich für beide Füllventile gleich ist.

Durch diese erfindungsgemäße Vorgehensweise kann die Wahrscheinlichkeit verringert werden, dass zwei unabhängig voneinander auftretende Ventilfehler an beiden Füllventilen fälschlicherweise als Prozessfehler gewertet werden.

Dieser Ausführungsform liegt die Erkenntnis zugrunde, dass sich ein Prozessfehler in einem Toleranzbereich gleich auf die einzelnen Füllstellen auswirkt und einen im Wesentlichen gleichen Fehler generiert. Ein im Wesentlichen gleicher Fehler macht sich durch ein im Wesentlichen gleiches Abweichen der aktuellen Ventilkennlinie von der Referenzventilkennlinie für jede Füllstelle bemerkbar. Unterscheidet sich ein Abweichen der aktuellen Ventilkennlinie einer Füllstelle in Maß und/oder Richtung von dem Abweichen der aktuellen Ventilkennlinie von der Referenzventilkennlinie der anderen Füllstelle, liegen voraussichtlich zwei unabhängige Füllstellenfehler, nicht jedoch ein Prozessfehler vor.

Zuvor ist ausgeführt worden, wie durch das erfindungsgemäße Verfahren ein Prozessfehler erkannt werden kann. Die Schwere des Fehlers kann unterschiedlich sein. Beispielsweise kann es sich um einen leichten Fehler handeln, der mit bestimmten Maßnahmen korrigiert werden kann, sodass der Betrieb der Abfüllanlage nicht gefährdet ist und weiter fortgesetzt werden kann. Bei einem schweren Fehler hingegen kann ein Abschalten der Abfüllanlage notwendig sein.

Eine bevorzugte Variante des erfindungsgemäßen Verfahrens zeichnet sich dadurch aus, dass im Fall eines Abweichens der Ventilkennlinien über einen ersten vorgegebenen Toleranzbereich hinaus eine Neukalibrierung der Ventile vorgenommen wird. Die Neukalibrierung wird bevorzugt von der Steuerund Auswerteeinheit durchgeführt.

Der Toleranzbereich wird in einer Variante von einem Benutzer festgelegt. Besonders bevorzugt ist der Toleranzbereich in der Steuer- und Auswerteeinheit hinterlegt.

In einer Variante wird der Toleranzbereich beispielsweise basierend auf der in der Abfüllanlage vorkommenden mittleren Streuung der Abfüllmenge gewählt. Bevorzugt wird zur Bewertung der Ventilkennlinien der zeitliche Verlauf der Ventilkennlinien und/oder das abgefüllte Gesamtvolumen herangezogen. Hierbei ergibt sich das abgefüllte Gesamtvolumen aus dem Integral über die Ventilkennline.In einer bevorzugten Ausführungsform des erfindungsgemäßen Verfahrens passt die Steuer- und Auswerteeinheit zum Kalibrieren der Ventile die Ventilkennlinie an. Hierdurch werden die Abweichungen berücksichtigt. Die Ventile werden anhand der neuen Ventilkennlinie kalibriert, sodass die Regelung der Abfüllanlage nicht angepasst werden muss. Die Ventile reagieren auf denselben Steuerbefehl nunmehr mit einem anderen Öffnungsgrad. Durch diese Ausgestaltung des erfindungsgemäßen Verfahrens können kleine Prozessfehler ausgeglichen und damit die Genauigkeit der Abfüllprozesse erhalten bleiben.

Eine besonders bevorzugte Ausführungsform des erfindungsgemäßen Verfahrens kennzeichnet sich dadurch, dass im Falle eines Abweichens der Ventilkennlinien von den Referenzventilkennlinien über einen vorgegebenen zweiten Toleranzbereich hinaus ein schwerwiegender Prozessfehler erkannt und signalisiert wird und/oder dass der Betrieb der Abfüllanlage angehalten wird. Der zweite Toleranzbereich ist bevorzugt in der Steuer- und Auswerteeinheit abgelegt. Weiter bevorzugt wird der zweite Toleranzbereich von einem Benutzer definiert. Der zweite Toleranzbereich kann beispielsweise anhand der gleichen Kriterien festgelegt werden, wie der erste Toleranzbereich. Liegen die Abweichungen über dem zweiten Toleranzbereich, ist der Fehler derart schwerwiegend, dass ein zuverlässiger Betrieb der Abfüllanlage, insbesondere ein zuverlässiges Abfüllen nicht mehr gegeben ist. Die Abfüllprozesse können nicht mehr zuverlässig durchgeführt werden. Wird ein schwerwiegender Prozessfehler erkannt und signalisiert, jedoch die Abfüllanlage nicht automatisch angehalten, so kann ein Benutzer entscheiden, ob er die Abfüllanlage anhalten möchte.

Eine weitere Lehre der Erfindung befasst sich mit einer weiteren Verbesserung der Fehlerauffindbarkeit und der Genauigkeit der Abfüllprozesse. Erfindungsgemäß ist vorgesehen, dass in der Steuer- und Auswerteeinheit eine Referenzventilgeschwindigkeit für das erste Füllventil und/oder für das zweite Füllventil abgelegt ist. Die Ausführungsform des erfindungsgemäßen Verfahrens zeichnet sich dadurch aus, dass in einem Zusatzschritt die Ventilgeschwindigkeit des ersten Füllventils und/oder des zweiten Füllventils ermittelt wird. Der Ermittlungsschritt kann als separater Ermittlungsschritt ausgeführt werden, oder im Zusammenhang mit dem Ermittlungsschritt zur Ermittlung der Referenzventilkennlinie realisiert werden. Erfindungsgemäß ist ferner vorgesehen, dass die ermittelte Ventilgeschwindigkeit oder die ermittelten Ventilgeschwindigkeiten mit der Referenzventilgeschwindigkeit des entsprechenden Füllventils oder mit den Referenzventilgeschwindigkeiten der entsprechenden Füllventile abgeglichen werden und dass im Fall eines Abweichens der Ventilgeschwindigkeit von der/den Referenzventilgeschwindigkeit/en eine Neukalibrierung des entsprechenden Füllventils bzw. der entsprechenden Füllventile erfolgt. Die Ventilgeschwindigkeit ergibt sich vorliegend aus der Zeit für die Änderung der Ventilöffnung um einen Schritt oder um eine vorbestimmte Anzahl von Schritten. Durch diese Variante können Fehler, die im Zusammenhang mit der Ventilgeschwindigkeit auftreten, korrigiert werden, ohne dass die Abfüllanlage angehalten werden muss.

Wird ein Abweichen der Ventilkennlinie nur an einer Füllstelle erkannt, so wird erfindungsgemäß ein Füllstellenfehler erkannt und signalisiert. Erfindungsgemäß zeichnet sich eine Variante des erfindungsgemäßen Verfahrens ferner dadurch aus, dass im Fall eines Erkennens eines Füllstellenfehlers die Steuer- und Auswerteeinheit das Füllventil der fehlerhaften Füllstelle mit einer vorgegebenen Anzahl und Art von Steuerbefehlen ansteuert und die Reaktion des Füllventils auf die Steuerbefehle detektiert. Bei einem Abweichen der Reaktion des Füllventils von der zu erwartenden Reaktion wird ein Ventilfehler erster Art erkannt. Unter einem Ventilfehler erster Art ist vorliegend bevorzugt ein Fehler zu verstehen, der sich direkt auf den Stellmotor des Füllventils auswirkt. Weiter bevorzugt wird in dieser Variante die Füllstelle außer Betrieb gesetzt. Zusätzlich oder alternativ wird eine Aufforderung zum Austausch des Ventils ausgegeben.

Reagiert das Füllventil in erwarteter Art und Weise auf die vorgegebenen Steuerbefehle, liegt also ein Nicht-Abweichen der Reaktion des Füllventils von der zu erwartenden Reaktion vor, zeichnet sich eine Alternative des erfindungsgemäßen Verfahrens dadurch aus, dass ein Ventilfehler zweiter Art oder ein Sensorfehler erkannt wird. Unter einem Ventilfehler zweiter Art wird vorliegend ein Fehler am Ventil bezeichnet, der keine Auswirkungen auf den Stellmotor des Ventils hat. Es kann nicht unterschieden werden, ob die Fehlerursache in dem Ventil oder in dem Sensor (Durchflusssensor oder Füllstandssensor) zu finden ist, es kann also nur erkannt werden, dass eine der beiden Komponenten betroffen ist. Weiter bevorzugt ist in dieser Variante vorgesehen, dass die Füllstelle außer Betrieb gesetzt wird. Zusätzlich oder alternativ wird eine Aufforderung zum Austausch des Ventils und des Sensors ausgegeben.

In einer alternativen Variante des erfindungsgemäßen Verfahrens ist vorgesehen, dass im Fall eines Erkennens eines Füllstellenfehlers die fehlerhafte Füllstelle mit Hilfe eines externen Prüfmittels überprüft wird. Als externes Prüfmittel können beliebige aus dem Stand der Technik bekannte Prüfmittel verwendet werden, die auch in aus dem Stand der Technik bekannter Art und Weise verwendet werden können. Die Verwendung von zusätzlichen externen Prüfmitteln ermöglicht beim Vorliegen eines Füllstellenfehlers eine genauere Untersuchung der Fehlerursache, da ein Füllstellenfehler durch einen Sensorfehler oder durch einen Ventilfehler bedingt sein kann.

Besonders bevorzugt wird zur Überprüfung der Füllstelle, bzw. zum Auffinden der Fehlerursache, nach erfolgter Befüllung eines Behältnisses der Füllgrad des befüllten Behältnisses mit Hilfe des externen Prüfmittels ermittelt. Anhand des Füllgrades und der Richtung der Abweichung der Ventilkennlinie von der Referenzventilkennlinie wird entweder auf einen Ventilfehler oder auf einen Sensorfehler geschlossen. Weicht beispielsweise die Ventilkennlinie nach unten von der Referenzventilkennlinie ab und ist gleichzeitig das Behältnis unterfüllt, oder weicht die Ventilkennlinie nach oben von der Referenzventilkennlinie ab und ist gleichzeitig das Behältnis überfüllt, ist das ein Hinweis darauf, dass das Ventil zu wenig bzw. zu viel Medium ausgibt und der Durchfluss- oder Füllstandssensor korrekt misst. Es liegt folglich ein Ventilfehler vor. Weicht hingegen die Ventilkennlinie nach unten von der Referenzventilkennlinie ab und ist gleichzeitig das Behältnis überfüllt oder weicht die Ventilkennlinie nach oben von der Referenzventilkennlinie ab und ist gleichzeitig das Behältnis unterfüllt, ist das ein Hinweis darauf, dass das Ventil korrekt arbeitet, jedoch der Durchfluss- oder Füllstandssensor zu viel oder zu wenig misst.

Besonders bevorzugt wird die fehlerhafte Füllstelle außer Betrieb gesetzt. Weiter bevorzugt wird eine Aufforderung zum Austausch des Ventils oder zum Austausch des Durchfluss- oder Füllstandssensors ausgegeben.

Neben dem Verfahren zum Betreiben einer Abfüllanlage betrifft die Erfindung ebenfalls eine Abfüllanlage. Die Abfüllanlage weist wenigstens eine erste Füllstelle, wenigstens eine zweite Füllstelle und wenigstens eine Steuer- und Auswerteeinheit zur Regelung und Überwachung der Abfüllprozesse auf, wobei die erste Füllstelle wenigstens ein erstes Füllventil und wenigstens einen ersten Durchflusssensor oder einen ersten Füllstandssensor aufweist, und wobei die zweite Füllstelle wenigstens ein zweites Füllventil und wenigstens einen zweiten Durchflusssensor oder einen zweiten Füllstandssensor aufweist, und wobei in der Steuer- und Auswerteeinheit eine Referenzventilkennlinie des ersten Füllventils und eine Referenzventilkennlinie des zweiten Füllventils abgelegt ist.

Die der Erfindung zugrunde liegende Aufgabe ist bei der Abfüllanlage erfindungsgemäß dadurch gelöst, dass die Steuer- und Auswerteeinheit derart ausgestaltet ist, dass sie in einem Ermittlungsschritt im Betriebszustand der Abfüllanlage eine aktuelle Ventilkennlinie des ersten Füllventils und eine aktuelle Ventilkennlinie des zweiten Füllventils ermittelt,
dass sie in einem Vergleichsschritt die aktuelle Ventilkennlinie des ersten Füllventils mit der Referenzventilkennlinie des ersten Füllventils vergleicht und die aktuelle Ventilkennlinie des zweiten Füllventils mit der Referenzventilkennlinie des zweiten Füllventils vergleicht,
dass sie in einem Abgleichschritt abgleicht, ob ein Abweichen einer aktuellen Ventilkennlinie von einer zugehörigen Referenzventilkennlinie an einer Füllstelle oder an beiden Füllstellen auftritt und
dass sie in einem Signalisierungsschritt im Fall eines Abweichens der Ventilkennlinie von der Referenzventilkennlinie an beiden Füllstellen einen Prozessfehler erkennt und signalisiert
und im Fall des Abweichens der Ventilkennlinie von der Referenzventilkennlinie an einer Füllstelle einen Füllstellenfehler der entsprechenden Füllstelle erkennt und signalisiert.

Eine besonders bevorzugte Ausgestaltung der erfindungsgemäßen Abfüllanlage zeichnet sich dadurch aus,dass die Steuer- und Auswerteeinheit wenigstens eine erste Teil-Einheit und eine zweite Teil-Einheit aufweist, wobei die erste Teil-Einheit die Steuerung der ersten Füllstelle realisiert und die zweite Teil-Einheit die Steuerung der zweiten Füllstelle realisiert, wobei die erste Teil-Einheit und die zweite Teil-Einheit über einen Kommunikationskanal verbunden sind und zum gegenseitigen Daten- und Kommunikationsaustausch ausgebildet sind, insbesondere dass die erste Teil-Einheit und die zweite Teil-Einheit derart ausgestaltet sind, dass sie im Abgleichschritt Daten über den Zustand der Füllventile austauschen und abgleichen.

Die Steuer- und Auswerteeinheit oder die Teil-Einheiten der Steuer- und Auswerteeinheit können in einer Variante realisiert sein durch Steuer- und Auswerteeinheiten der Durchflusssensoren oder Füllstandssensoren.

Weitere bevorzugte Ausgestaltungen der erfindungsgemäßen Abfüllanlage zeichnen sich dadurch aus, dass die Steuer- und Auswerteeinheit derart ausgestaltet ist, dass sie einen oder mehrere der zuvor im Zusammenhang mit dem erfindungsgemäßen Verfahren beschriebene Verfahrensschritte ausführen kann.

Sämtliche im Zusammenhang mit dem erfindungsgemäßen Verfahren beschriebene vorteilhafte Ausgestaltungen sowie deren Vorteile gelten analog auch für die erfindungsgemäße Abfüllanlage und umgekehrt.

Im Einzelnen gibt es nun eine Vielzahl von Möglichkeiten, das erfindungsgemäße Verfahren und die erfindungsgemäße Abfüllanlage auszugestalten und weiterzubilden. Hierzu wird verwiesen auf die den unabhängigen Patentansprüchen nachgeordenten Patentansprüche sowie auf die Beschreibung bevorzugter Ausführungsbeispiele in Zusammenhang mit der Zeichnung. In der Zeichnung zeigen
- Fig. 1: ein erstes Blockdiagramm eines Verfahrens zum Betreiben einer Abfüllanlage,
- Fig. 2: ein zweites Blockdiagramm eines Verfahrens zum Betreiben einer Abfüllanlage,
- Fig. 3: ein erstes Flussdiagramm eines Verfahrens zum Betreiben einer Abfüllanlage,
- Fig. 4: ein zweites Flussdiagramm eines Verfahrens zum Betreiben einer Abfüllanlage,
- Fig. 5: eine schematische Darstellung einer ersten Abfüllanlage und
- Fig. 6: eine schematische Darstellung einer zweiten Abfüllanlage.

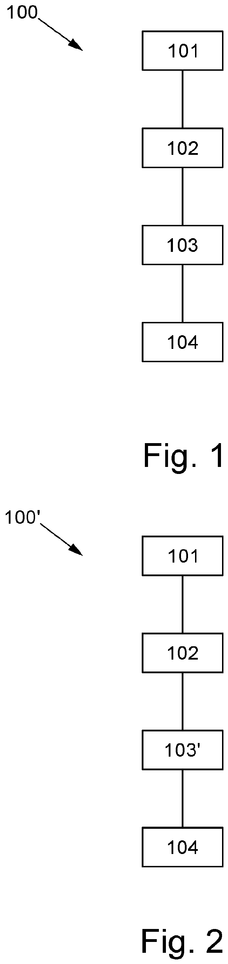

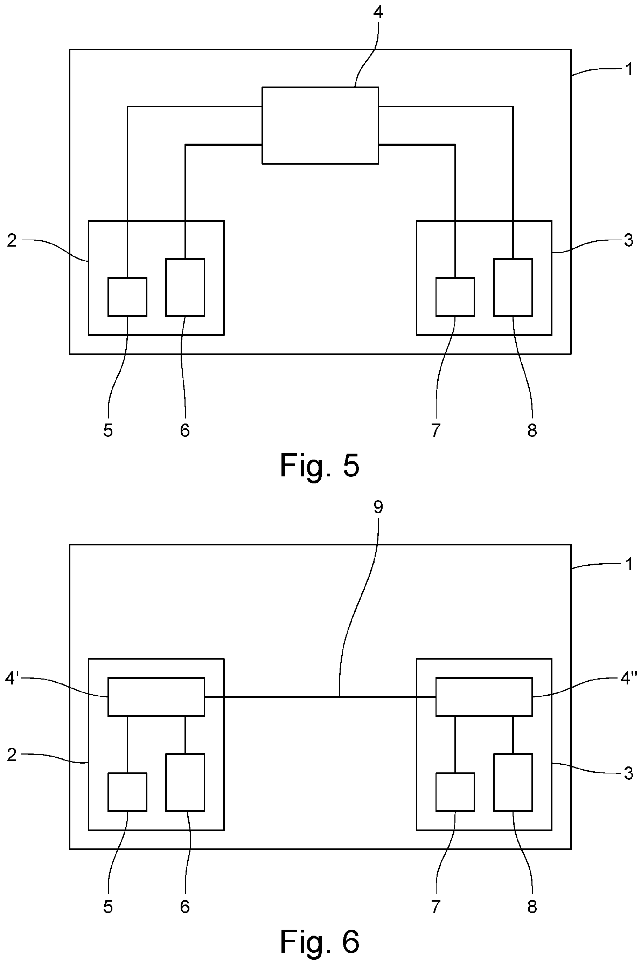

Fig. 1 zeigt ein Blockdiagramm eines Verfahrens 100 zum Betreiben einer Abfüllanlage 1, wie sie in Fig. 5 schematisch dargestellt ist. Wie aus Fig. 5 ersichtlich, weist die Abfüllanlage 1 eine erste Füllstelle 2 und eine zweite Füllstelle 3 auf. Zudem weist die Abfüllanlage 1 eine Steuer- und Auswerteeinheit 4 auf, die zur Regelung und Überwachung der Abfüllprozesse dient. Die erste Füllstelle 2 weist ein erstes Füllventil 5 und einen ersten Durchflusssensor 6 auf. Die zweite Füllstelle 3 hingegen weist ein zweites Füllventil 7 und einen zweiten Durchflusssensor 8 auf. Im vorliegenden Fall sind die Durchflusssensoren 6, 8 als Durchflusssensoren ausgestaltet, jedoch ist auch die Verwendung von Füllstandsensoren möglich. In der Steuer- und Auswerteeinheit 4 ist eine Referenzventilkennlinie des ersten Füllventils 5 und eine Referenzventilkennlinie des zweiten Füllventils 7 abgelegt. Die Steuer- und Auswerteeinheit 4 ist ferner derart ausgestaltet, dass sie das in Fig. 1 beschriebene Verfahren durchführen kann.

Bei dem in Fig. 1 dargestellten Verfahren 100 wird in einem Ermittlungsschritt 101 eine aktuelle Ventilkennlinie des ersten Füllventils 5 und eine aktuelle Ventilkennlinie des zweiten Füllventils 7 ermittelt. In einem Vergleichsschritt 102 werden anschließend die aktuellen Ventilkennlinien der beiden Füllventile 5, 7 mit den jeweiligen Referenzventilkennlinien verglichen. Zum Vergleich einer aktuellen Ventilkennlinie mit einer Referenzventilkennlinie werden bevorzugt mehrere Punkte der Kennlinien abgeglichen. In einem Abgleichschritt 103 gleicht die Steuer- und Auswerteeinheit ab, an wie vielen der Füllstellen 2, 3 ein Abweichen der aktuellen Ventilkennlinie von der zugehörigen Referenzventilkennlinie auftritt. In der dargestellten Ausführungsform werden zudem sowohl das Maß der Abweichung einer Ventilkennlinie von der Referenzventilkennlinie als auch die Richtung der Abweichung bestimmt. In dem nachfolgenden Signalisierungsschritt 104 wird im Fall des Abweichens der Ventilkennlinie von der Referenzventilkennlinie an nur einer Füllstelle 2, 3 ein Füllstellenfehler der entsprechenden Füllstelle 2, 3 erkannt und signalisiert und im Fall eines Abweichens beider Ventilkennlinien von den Referenzventilkennlinien ein Prozessfehler erkannt und signalisiert.

Fig. 2 zeigt ein weites Blockdiagramm eines Verfahrens 100' zum Betreiben einer Abfüllanlage 1. Das hier dargestellte Verfahren 100' eignet sich zum Betreiben einer Abfüllanlage 1, wie sie in Fig. 6 dargestellt ist.

Fig. 6 zeigt eine weitere schematische Darstellung einer Abfüllanlage 1. Die in Fig. 6 dargestellte Abfüllanlage 1 unterscheidet sich von der in Fig. 5 dargestellten Abfüllanlage 1 dadurch, dass die Steuer- und Auswerteeinheit 4 eine erste Teil-Einheit 4' und eine zweite Teil-Einheit 4" aufweist. Die beiden Teil-Einheiten 4', 4" sind über einen Kommunikationskanal 9 miteinander verbunden. Über diesen Kommunikationskanal 9 erfolgt ein Datenaustausch zwischen den beiden Teil-Einheiten 4', 4". Die erste Teil-Einheit 4' ist derart ausgestaltet, dass sie die Regelung einer Überwachung der ersten Füllstelle 2 realisiert. Die zweite Teil-Einheit 4" ist derart ausgestaltet, dass sie die Regelung und Überwachung der zweiten Füllstelle 3 realisiert. Ferner sind die beiden Teil-Einheiten 4', 4" derart ausgestaltet, dass sie das in Fig. 2 beschriebene Verfahren 100 realisieren.

Das in Fig. 2 dargestellte Verfahren 100' unterscheidet sich von dem in Fig. 1 dargestellten Verfahren darin, dass im Abgleichschritt 103' die erste Teil-Einheit 4' und die zweite Teil-Einheit 4" jeweils abgleichen, ob ein Abweichen der aktuellen Ventilkennlinie von der Referenzventilkennlinie vorliegt und dann Informationen über den Zustand der Füllventile 2, 3 miteinander austauschen und diese Informationen miteinander abgleichen. Hier wird insbesondere eine Information über eine Abweichung einer aktuellen Ventilkennlinie eines der Füllventile 2, 3 von einer entsprechenden Referenzventilkennlinie ausgetauscht. Die Referenzventilkennlinie des ersten Füllventils 5 ist in der ersten Teil-Einheit 4' abgelegt, die Referenzventilkennlinie des zweiten Füllventils 7 ist in der Teil-Einheit 4" abgelegt. In der dargestellten Ausführungsform fordert die erste Teil-Einheit 4' die Informationen von der zweiten Teil-Einheit 4" an und ermittelt dann, ob ein Füllstellenfehler oder ein Prozessfehler vorliegt. Ein Prozessfehler wird vorliegend erkannt, wenn das Maß der Abweichung der Ventilkennlinien von den Referenzventilkennlinien beider Füllventile 2, 3 in einem vorgegebenen Toleranzbereich gleich ist und/oder wenn die Richtung der Abweichung der Ventilkennlinien von den Referenzventilkennlinien beider Füllventile 2, 3 in einem vorgegebenen Toleranzbereich gleich ist.

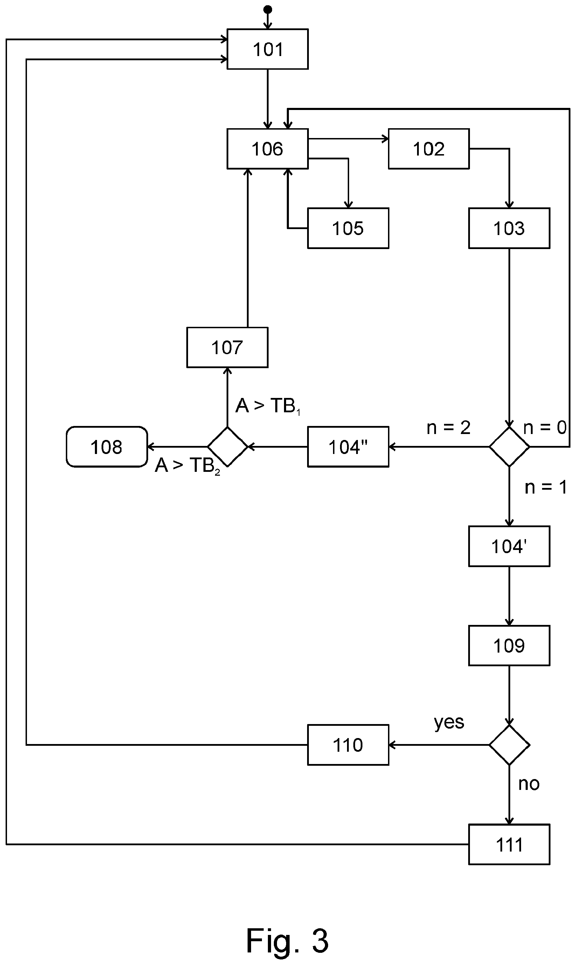

Fig. 3 zeigt ein Flussdiagramm eines Verfahrens 100 zum Betreiben einer Abfüllanlage 1, wie sie in Fig. 5 dargestellt ist. Zunächst wird im Ermittlungsschritt 101 eine aktuelle Ventilkennlinie der Füllventile 5, 7 ermittelt. Die Anlage befindet sich dann im Regelbetrieb 106. In einem Vergleichsschritt 102 vergleicht die Steuer- und Auswerteeinheit die aktuellen Ventilkennlinien der Füllventile 5, 7 mit den in der Steuer- und Auswerteeinheit abgelegten Referenzventilkennlinien. In dem anschließenden Abgleichschritt 103 gleicht die Steuer- und Auswerteeinheit 4 ab, an wie vielen der Füllstellen 2, 3 ein Abweichen der aktuellen Ventilkennlinie von der entsprechenden Referenzventilkennlinie festgestellt worden ist.

Parallel hierzu ermittelt die Steuer- und Auswerteeinheit in einem Zusatzschritt 105 die Ventilgeschwindigkeiten der Füllventile 5, 7 und gleicht diese mit in der Steuer- und Auswerteeinheit 4 abgelegten Referenzventilgeschwindigkeiten ab. Wird eine Abweichung zumindest einer Ventilgeschwindigkeit von der entsprechenden Referenzventilgeschwindigkeit festgestellt, so wird das entsprechende Füllventil neu kalibriert. Anschließend geht die Abfüllanlage 1 wieder in den Regelbetrieb 106 über.

Wird in dem Abgleichschritt 103 festgestellt, dass an keiner der Füllstellen 2, 3 ein Abweichen A der aktuellen Ventilkennlinie von der Referenzventilkennlinie vorliegt - n=0 -, so geht die Abfüllanlage 1 in den Regelbetrieb 106 über.

Wird festgestellt, dass an beiden Füllstellen 2, 3 ein Abweichen A der aktuellen Ventilkennlinie von der Referenzventilkennlinie vorliegt - n=2 -, so wird in einem Signalisierungsschritt 104" ein Prozessfehler erkannt und signalisiert. Anschließend werden im dargestellten Ausführungsbeispiel das Maß und die Richtung der Abweichungen A bestimmt. Im Fall eines Abweichens A der aktuellen Ventilkennlinien über einen ersten Toleranzbereich TB₁ hinaus werden in einem Schritt 107 die Füllventile 5, 7 durch die Anpassung der Ventilkennlinien neu kalibriert. Anschließend geht die Abfüllanlage 1 in den Regelbetrieb 106 über. Im Fall eines Abweichens A der aktuellen Ventilkennlinien über einen zweiten Toleranzbereich TB₂ hinaus, wird in einem Schritt 108 ein schwerwiegender Prozessfehler erkannt und signalisiert und/ oder der Betrieb der Abfüllanlage 1 angehalten.

Wird festgestellt, dass an einer der beiden Füllstellen 2, 3 ein Abweichen A der aktuellen Ventilkennlinie von der Referenzventilkennlinie vorliegt - n= 1 -, so wird in einem Signalisierungsschritt 104' ein Füllstellenfehler der entsprechenden Füllstelle 2, 3 erkannt und signalisiert. Zur weiteren Erkennung der Fehlerursache wird anschließend in einem Schritt 109 das Füllventil 5, 7 der fehlerhaften Füllstelle 2, 3 mit einer vorgegebenen Anzahl und Art von Steuerbefehlen angesteuert und die Reaktion des Füllventils 2, 3 auf die Steuerbefehle überwacht. Es wird überprüft, ob die Reaktion des Füllventils 2, 3 auf die Steuerbefehle der erwarteten Reaktion entspricht.

Weicht die Reaktion des Füllventils 5, 7 von der erwarteten Reaktion ab, so wird in einem Schritt 110 ein Ventilfehler erster Art erkannt. Unter einem Ventilfehler erster Art ist ein Ventilfehler zu verstehen, der sich auf den Stellmotor des Füllventils 5, 7 auswirkt. Die betroffene Füllstelle 2, 3 wird außer Betrieb gesetzt und es wird zudem eine Aufforderung zum Austausch des fehlerhaften Füllventils 5, 7 ausgegeben. Nach erfolgtem Austausch des Füllventils 5, 7 können erneut Ventilgeschwindigkeit und Ventilkennlinie des ausgetauschten Füllventils 5, 7 aufgenommen werden - 101 - und die Abfüllanlage 1 in den Regelbetrieb 106 übergehen.

Weicht die Reaktion des Füllventils 5, 7 hingegen nicht von der erwarteten Reaktion ab, so muss entweder ein Ventilfehler vorliegen, der sich nicht auf den Stellmotor des Füllventils 5, 7 auswirkt - ein solcher Ventilfehler wird als Ventilfehler zweiter Art bezeichnet - oder es muss ein Sensorfehler vorliegen. Es ist nicht möglich, zwischen diesen beiden Fehlerarten zu unterscheiden. Demnach wird in einem Schritt 111 ein Fehler der Art "Ventilfehler zweiter Art oder Sensorfehler" erkannt. Die betroffene Füllstelle 2, 3 wird außer Betrieb gesetzt. Zudem wird zum Austausch des Füllventils 5, 7 sowie des Durchfluss- oder Füllstandssensors 6, 8 aufgefordert. Nach erfolgtem Austausch der des Füllventils 5, 7 und des Durchfluss- oder Füllstandssensors 6, 8 können Ventilgeschwindigkeit und Ventilkennlinie des ausgetauschten Füllventils 5, 7 erneut aufgenommen werden - 101- und die Abfüllanlage in den Regelbetrieb 106 übergehen.

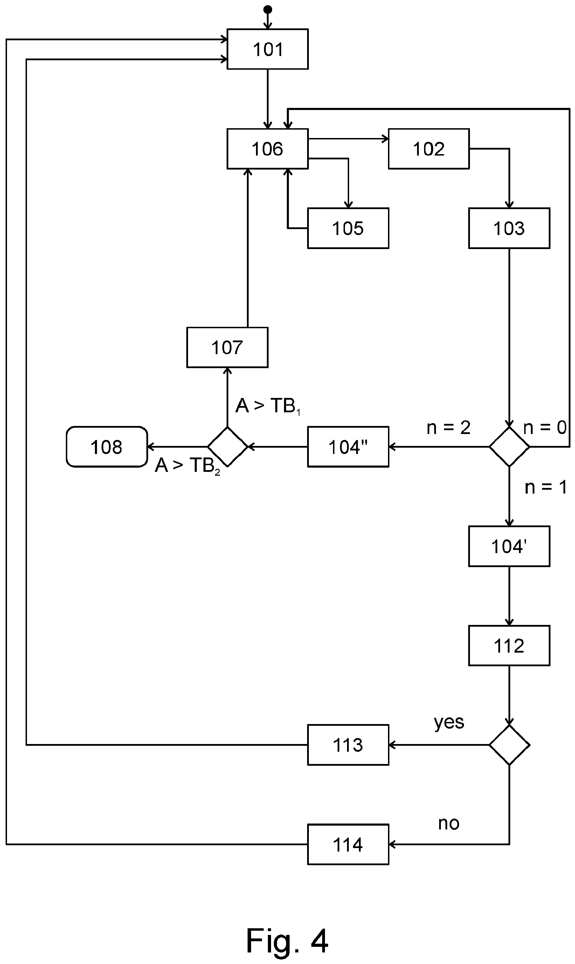

Fig. 4 zeigt ein weiteres Flussdiagramm eines Verfahrens 100 zum Betreiben einer Abfüllanlage 1. Bei dem hier dargestellten Verfahren 100 wird im Vergleich zu dem in Fig. 3 dargestellten Verfahren ein externes Prüfmittel verwendet, um im Fall des Erkennens eines Füllstellenfehlers - 104' - die Fehlerursache genauer zu identifizieren. Ein externes Prüfmittel kann hierbei beispielsweise eine Kamera sein, mit der der Füllgrad eines befüllten Behältnisses ermittelt wird, oder beispielsweise eine Waage, mit der das Gewicht des Behältnisses nach der Befüllung ermittelt wird, wodurch ebenfalls auf den Füllgrad des Behältnisses geschlossen werden kann. Jegliche aus dem Stand der Technik bekannte externe Prüfmittel können vorliegend zum Einsatz kommen.

In einem Schritt 112 wird zunächst das Behältnis befüllt, indem der Abfüllprozess wie gewohnt durchgeführt wird. Mit Hilfe des externen Prüfmittels wird anschließend der Füllgrad des Behältnisses ermittelt. Zudem werden Abweichungen der Ventilkennlinie von der Referenzventilkennlinie des Füllventils 5, 7 der fehlerhaften Füllstelle 2, 3 ermittelt. Anhand des Füllgrades des befüllten Behältnisses und der Richtung der Abweichung der Ventilkennlinie von der Referenzventilkennlinie kann auf einen Ventilfehler oder einen Sensorfehler geschlossen werden. Hierzu wird überprüft, ob die Bedingungen für das Vorliegen eines Ventilfehlers vorliegen. Diese Bedingungen werden von einem Benutzer vorab definiert und können in der Steuer- und Auswerteeinheit 4 abgelegt sein. Vorliegend müssen folgende Bedingungen erfüllt sein, um einen Ventilfehler zu identifizieren: die Ventilkennlinie weicht nach unten ab und das Behältnis ist unterfüllt; oder die Ventilkennlinie weicht nach oben ab und das Behältnis ist überfüllt. Wird einer der Zustände erkannt, so wird im Schritt 113 ein Ventilfehler erkannt und ausgegeben. Zudem wird eine Aufforderung zum Austausch des Füllventils 5, 7 ausgegeben. Nach erfolgten Austausch des Füllventils 5, 7 können Ventilgeschwindigkeit und Ventilkennlinie des ausgetauschten Füllventils 5, 7 erneut aufgenommen werden - 101- und die Abfüllanlage in den Regelbetrieb 106 übergehen.

Sind die Bedingungen zum Vorliegen eines Ventilfehlers nicht erfüllt, wird in einem weiteren Schritt 114 überprüft, ob die Bedingungen zum Vorliegen eines Sensorfehlers erfüllt sind. Diese Bedingungen können ebenfalls von einem Benutzer definiert werden und in der Steuer- und Auswerteeinheit abgelegt sein. Im vorliegenden Ausführungsbeispiels sind die Bedingungen zum Vorliegen eines Sensorfehlers: die Ventilkennlinie weicht nach unten ab und das Behältnis ist überfüllt; oder die Ventilkennlinie weicht nach oben ab und das Behältnis ist unterfüllt. Wird einer der Zustände erkannt, so wird ein Sensorfehler erkannt und ausgegeben. Zudem wird eine Aufforderung zum Austausch des Durchfluss- oder Füllstandssensors 6, 8 ausgegeben. Nach erfolgten Austausch des Durchfluss- oder Füllstandssensors 6, 8 können Ventilgeschwindigkeit und Ventilkennlinie des Füllventils 5, 7 erneut aufgenommen werden - 101- und die Abfüllanlage in den Regelbetrieb 106 übergehen.

### Bezugszeichen

- 1: Abfüllanlage
- 2: erste Füllstelle
- 3: zweite Füllstelle
- 4: Steuer- und Auswerteeinheit
- 4': erste Teil-Einheit der Steuer- und Auswerteeinheit
- 4": zweite Teil-Einheit der Steuer- und Auswerteeinheit
- 5: erstes Füllventil
- 6: erster Durchfluss- oder Füllstandssensor
- 7: zweites Füllventil
- 8: zweiter Durchfluss- oder Füllstandssensor
- 9: Kommunikationskanal
- n: Anzahl Füllstellen mit Abweichungen
- A: Abweichen
- TB₁: erster Toleranzbereich
- TB₂: zweiter Toleranzbereich
- 100: Verfahren
- 101: Ermittlungsschritt
- 102: Vergleichsschritt
- 103: Abgleichschritt
- 104: Signalisierungsschritt
- 105: Zusatzschritt
- 106: Regelbetrieb
- 107: Neukalibrierung des Füllventils
- 108: Erkennen und Signalisieren schwerwiegender Füllstellenfehler und/oder Anhalten der Abfüllanlage
- 109: Schritt zum Ansteuern des Füllventils und Überwachung der Reaktion
- 110: Erkennen eines Ventilfehlers erster Art und Auffordern zum Austausch
- 111: Erkennen eines Ventilfehlers zweiter Art oder Sensorfehlers und Auffordern zum Austausch
- 112: Befüllen eines Behältnisses und Bestimmung des Füllgrads mit externem Prüfmittel
- 113: Erkennen und Signalisieren eines Ventilfehlers, Auffordern zum Austausch
- 114: Erkennen und Signalisieren eines Sensorfehlers, Auffordern zum Austausch

## Patentansprüche

1. Verfahren (100) zum Betreiben einer Abfüllanlage (1), wobei die Abfüllanlage (1) wenigstens eine erste Füllstelle (2), wenigstens eine zweite Füllstelle (3) und wenigstens eine Steuer- und Auswerteeinheit (4) zur Regelung und Überwachung der Abfüllprozesse aufweist, wobei die erste Füllstelle (2) wenigstens ein erstes Füllventil (5) und wenigstens einen ersten Durchfluss- oder Füllstandssensor (6) aufweist, und wobei die zweite Füllstelle (3) wenigstens ein zweites Füllventil (7) und wenigstens einen zweiten Durchfluss- oder Füllstandssensor (8) aufweist, und wobei in der Steuer- und Auswerteeinheit (4) eine Referenzventilkennlinie des ersten Füllventils (5) und eine Referenzventilkennlinie des zweiten Füllventils (7) abgelegt ist,
**dadurch gekennzeichnet,**
**dass** im Betriebszustand der Abfüllanlage (1) in einem Ermittlungsschritt (101) die Steuer- und Auswerteeinheit (4) eine aktuelle Ventilkennlinie des ersten Füllventils (5) und eine aktuelle Ventilkennlinie des zweiten Füllventils (7) ermittelt,
**dass** in einem Vergleichsschritt (102) die Steuer- und Auswerteeinheit (4) die aktuelle Ventilkennlinie des ersten Füllventils (5) mit der Referenzventilkennlinie des ersten Füllventils (5) vergleicht und die aktuelle Ventilkennlinie des zweiten Füllventils (7) mit der Referenzventilkennlinie des zweiten Füllventils (7) vergleicht,
**dass** in einem Abgleichschritt (103) die Steuer- und Auswerteeinheit (4) abgleicht, an wie vielen der Füllstellen (2, 3) ein Abweichen der aktuellen Ventilkennlinie von der zugehörigen Referenzventilkennlinie auftritt und
**dass** in einem Signalisierungsschritt (104) die Steuer- und Auswerteeinheit (1) im Fall eines Abweichens (A) der Ventilkennlinie von der Referenzventilkennlinie an einer Füllstelle (2, 3) einen Füllstellenfehler der entsprechenden Füllstelle (2, 3) erkennt und signalisiert (104')
und im Fall des Abweichens (A) der Ventilkennlinie von der Referenzventilkennlinie an beiden Füllstellen (2, 3) einen Prozessfehler erkennt und signalisiert (104").

2. Verfahren (100) nach Anspruch 1, wobei die Steuer- und Auswerteeinheit (4) wenigstens eine erste Teil-Einheit (4') und eine zweite Teil-Einheit (4") aufweist, wobei die erste Teil-Einheit (4') die Regelung und Überwachung der ersten Füllstelle (2) realisiert und die zweite Teil-Einheit (4") die Regelung und Überwachung der zweiten Füllstelle (3) realisiert, wobei die erste Teil-Einheit (4') und die zweite Teil-Einheit (4") über einen Kommunikationskanal (9) miteinander verbunden sind, **dadurch gekennzeichnet, dass** im Abgleichschritt (103) die erste Teil-Einheit (4') und die zweite Teil-Einheit (4") Informationen über den Zustand der Füllventile (5, 7) austauschen und abgleichen, insbesondere Informationen über eine Abweichung der aktuellen Ventilkennlinien von den entsprechenden Referenzventilkennlinien austauschen und abgleichen.

3. Verfahren (100) nach Anspruch 1 oder 2, **dadurch gekennzeichnet, dass** im Abgleichschritt (103) das Maß und/oder die Richtung der Abweichung (A) der Ventilkennlinien von den Referenzventilkennlinien der Füllventile (5, 7) der Füllstellen (2, 3) abgeglichen wird/werden und dass im Signalisierungsschritt (104) ein Prozessfehler dann erkannt und signalisiert wird, wenn das Maß der Abweichung (A) der Ventilkennlinien von den Referenzventilkennlinien beider Füllventile (5, 7) in einem vorgegebenen Toleranzbereich gleich ist und/oder die Richtung der Abweichung (A) der Ventilkennlinien von den Referenzventilkennlinien beider Füllventile (5, 7) gleich ist.

4. Verfahren (100) nach einem der Ansprüche 1 bis 3, **dadurch gekennzeichnet, dass** im Fall eines Abweichens (A) der Ventilkennlinien von den Referenzventilkennlinien über einen vorgegebenen ersten Toleranzbereich (TB₁) hinaus die Füllventile (5, 7) neu kalibriert werden (107), insbesondere durch Anpassung der Ventilkennlinien der jeweiligen Füllventile (5, 7) neu kalibriert werden.

5. Verfahren (100) nach einem der Ansprüche 1 bis 4, **dadurch gekennzeichnet, dass** im Falle eines Abweichens (A) der Ventilkennlinien von den Referenzventilkennlinien über einen vorgegebenen zweiten Toleranzbereich (TB₂) hinaus ein schwerwiegender Prozessfehler erkannt und signalisiert wird und/oder der Betrieb der Abfüllanlage (1) angehalten wird (108).

6. Verfahren (100) nach einem der Ansprüche 1 bis 5, wobei in der Steuer- und Auswerteeinheit (4) eine Referenzventilgeschwindigkeit für das erste Füllventil (5) und/oder für das zweite Füllventil (7) abgelegt ist, **dadurch gekennzeichnet, dass** die Steuer- und Auswerteeinheit (4) in einem Zusatzschritt (105) die Ventilgeschwindigkeit des ersten Füllventils (5) und/oder des zweiten Füllventils (7) ermittelt und mit der Referenzventilgeschwindigkeit des entsprechenden Füllventils (5, 7) abgleicht und dass im Fall eines Abweichens der Ventilgeschwindigkeit von der Referenzventilgeschwindigkeit eine Neukalibrierung des entsprechenden Füllventils (5, 7) erfolgt.

7. Verfahren (100) nach einem der Ansprüche 1 bis 6, **dadurch gekennzeichnet, dass** im Fall eines Erkennens eines Füllstellenfehlers die Steuerund Auswerteeinheit (4) das Füllventil (5, 7) der fehlerhaften Füllstelle (2, 3) mit einer vorgegebenen Anzahl und Art von Steuerbefehlen ansteuert und die Reaktion des Füllventils (5, 7) auf die Steuerbefehle überwacht (109) und
• dass bei einem Abweichen der Reaktion des Füllventils (5, 7) von der zu erwartenden Reaktion ein Ventilfehler erster Art erkannt wird (110), insbesondere wobei die Füllstelle (2, 3) außer Betrieb gesetzt wird und/oder wobei eine Aufforderung zum Austausch des Füllventils (5, 7) ausgegeben wird,
• oder dass bei einem Nicht-Abweichen der Reaktion des Füllventils (5, 7) von der zu erwartenden Reaktion ein Ventilfehler zweiter Art oder ein Sensorfehler erkannt wird (111), insbesondere wobei die Füllstelle (2, 3) außer Betrieb gesetzt wird und/oder wobei eine Aufforderung zum Austausch des Füllventils (5, 7) und des Durchfluss- oder Füllstandssensors (6, 8) ausgegeben wird.

8. Verfahren (100) nach einem der Ansprüche 1 bis 7, **dadurch gekennzeichnet, dass** im Fall eines Erkennens eines Füllstellenfehlers die fehlerhafte Füllstelle (2, 3) mit Hilfe eines externen Prüfmittels überprüft wird, insbesondere wobei zur Überprüfung der Füllstelle nach erfolgter Befüllung eines Behältnisses mit Hilfe eines externen Prüfmittels der Füllgrad des befüllten Behältnisses ermittelt wird, und dass anhand des Füllgrades und der Richtung der Abweichung der Ventilkennlinie von der Referenzventilkennlinie auf einen Ventilfehler oder auf einen Sensorfehler geschlossen wird (112, 113, 114), insbesondere wobei die fehlerhafte Füllstelle (2, 3) außer Betrieb gesetzt wird und/oder eine Aufforderung zum Austausch des Füllventils (5, 7) oder zum Austausch des Durchfluss- oder Füllstandssensors (6, 8) ausgegeben wird.

9. Abfüllanlage (1), wobei die Abfüllanlage (1) wenigstens eine erste Füllstelle (2), wenigstens eine zweite Füllstelle (3) und wenigstens eine Steuer- und Auswerteeinheit (4) zur Regelung und Überwachung der Abfüllprozesse aufweist, wobei die erste Füllstelle (1) wenigstens ein erstes Füllventil (5) und wenigstens einen ersten Durchfluss- oder Füllstandssensor (6) aufweist, und wobei die zweite Füllstelle (3) wenigstens ein zweites Füllventil (7) und wenigstens einen zweiten Durchfluss- oder Füllstandssensor (8) aufweist, und wobei in der Steuer- und Auswerteeinheit (4) eine Referenzventilkennlinie des ersten Füllventils (5) und eine Referenzventilkennlinie des zweiten Füllventils (7) abgelegt ist,
**dadurch gekennzeichnet,**
**dass** die Steuer- und Auswerteeinheit (4) derart ausgestaltet ist, dass sie in einem Ermittlungsschritt (101) eine aktuelle Ventilkennlinie des ersten Füllventils (5) und eine aktuelle Ventilkennlinie des zweiten Füllventils (7) ermittelt,
**dass** sie in einem Vergleichsschritt (102) die aktuelle Ventilkennlinie des ersten Füllventils (5) mit der Referenzventilkennlinie des ersten Füllventils (5) vergleicht und die aktuelle Ventilkennlinie des zweiten Füllventils (7) mit der Referenzventilkennlinie des zweiten Füllventils (7) vergleicht,
**dass** sie in einem Abgleichschritt (103) abgleicht, an wie vielen der Füllstellen (2, 3) ein Abweichen der aktuellen Ventilkennlinie von der zugehörigen Referenzventilkennlinie auftritt und
**dass** sie in einem Signalisierungsschritt (104) im Fall eines Abweichens der Ventilkennlinie von der Referenzventilkennlinie an einer Füllstelle (2, 3) einen Füllstellenfehler der entsprechenden Füllstelle (2, 3) erkennt und signalisiert
und im Fall des Abweichens der Ventilkennlinie von der Referenzventilkennlinie an beiden Füllstellen (2, 3) einen Prozessfehler erkennt und signalisiert.

10. Abfüllanlage (1) nach Anspruch 9, **dadurch gekennzeichnet, dass** die Steuer- und Auswerteeinheit (4) wenigstens eine erste Teil-Einheit (4') und eine zweite Teil-Einheit (4") aufweist, wobei die erste Teil-Einheit (4') die Steuerung der ersten Füllstelle (2) realisiert und die zweite Teil-Einheit (4") die Steuerung der zweiten Füllstelle (3) realisiert, wobei die erste Teil-Einheit (4') und die zweite Teil-Einheit (4") über einen Kommunikationskanal (9) verbunden sind und zum gegenseitigen Daten- und Kommunikationsaustausch ausgebildet sind, insbesondere dass die erste Teil-Einheit (4') und die zweite Teil-Einheit (4") derart ausgestaltet sind, dass sie im Abgleichschritt (103) Daten über den Zustand der Füllventile (2, 3) austauschen und abgleichen.

11. Abfüllanlage (1) nach Anspruch 9 oder 10, **dadurch gekennzeichnet, dass** die Steuer- und Auswerteeinheit (4) ferner ausgebildet ist, die Verfahrensschritte gemäß den Patentansprüchen 3 bis 8 auszuführen.
